# EUROPEAN PATENT SPECIFICATION

(11) **EP 1 162 241 B1**
(45) Date of publication and mention of the grant of the patent: **03.08.2005**
(21) Application number: 01201894.1
(22) Date of filing: 21.05.2001
(51) Int. Cl.: C09D 5/03, C09D 201/02, B44C 1/17

(54) **Preparation of a decorated substrate using at hermally curable powder coating composition**
Herstellung eines dekorierten Substrats unter Verwendung einer thermisch vernetzbaren Beschichtungszusammensetzung
Préparation d'un substrat décoré utilisant une composition de revêtement thermodurcissable

(30) Priority: 23.05.2000 EP 00201785
(43) Date of publication of application: 12.12.2001
(73) Proprietor: Akzo Nobel Coatings International B.V., 6824 BM Arnhem (NL)
(72) Inventor: Stula, Vladimir, 22102 Cernobbio (IT); Rossini, Tullio, 12100 Como (IT)
(74) Representative: Schalkwijk, Pieter Cornelis

(56) References cited:
- EP-A- 0 522 648
- EP-A- 0 553 750
- EP-A- 0 782 934
- WO-A-92/01756
- WO-A-92/01757
- WO-A-93/04102
- WO-A-96/05239
- WO-A-98/08694
- PATENT ABSTRACTS OF JAPAN vol. 012, no. 462 (C-549), 5 December 1988 (1988-12-05) & JP 63 182382 A (UNITIKA LTD;OTHERS: 01), 27 July 1988 (1988-07-27)

## Description

The present invention relates to the preparation of a decorated substrate using a thermally curable powder coating composition.
The process for the preparation of a decorated substrate by transfer printing referred to in this patent specification generally comprises the steps of:
- submitting a substrate to a treatment to prepare its surface for the application of a coating,
- applying a coating to the surface of the substrate in one or more cycles,
- covering the surface of the substrate with a sheet comprising a decoration which is to be transferred to said surface, and
- heating the substrate and the sheet comprising the decoration to effect the transfer of the decoration from the sheet onto the substrate.

Such a process is known from patent application WO 96/29208, which is directed to a process and the relevant apparatus for making decorated, extruded, profiled elements. However, in this publication very little information is given on the material used to coat the surface of the substrate.

In US 3,907,974 curable decorating systems for glass or metal containers using a heat transfer decoration are disclosed. This patent is mainly concerned with the heat transfer decoration itself, i.e. a sheet comprising the decoration. Such a decoration can be built up of multiple layers comprising a clear lacquer, a binder, a hardener, solvents, dyes, etc. Before the decoration is applied to it, the substrate is treated with a silane adhesion promoter. Before application of the decoration, the substrate is heated to a temperature of 65 to 120°C. After transfer of the decoration, the decorated substrate is heat cured for 10-20 minutes at 95 - 150°C and optionally cured further for 10-20 minutes at 175 - 230°C.

In EP 60 107 a process for transfer printing is disclosed in which a substrate (a continuous length of strip) is coated with a thermosetting material, e.g., an alkyd, polyester, polyurethane or epoxy paint. Immediately after curing at a temperature between 190 and 250°C the substrate is brought into contact with a continuous strip of printed material. At a temperature between 180 - 280°C the printing ink is transferred to the strip by sublimation.

In WO 98/08694 a process is disclosed for decorating metal, plastic or the like materials. In this publication very little information is given on the material used to coat the surface of the substrate.

It was found that the type of material used to coat the substrate before the transfer printing step is of the utmost importance to the properties and appearance of the decorated substrate.
The decorated substrate should have good mechanical properties (e.g. scratch resistance and adhesion to the substrate), the image should be transferred completely in the transfer printing process, and the image's support (normally paper) should detach easily after transfer of the image.

It was found that all these properties can be achieved when the substrate is coated with a powder coating composition comprising a mixture of resins wherein
- at least one resin has a hydroxy number of less than 75 mg KOH/g,
- at least one resin has a hydroxy number of at least 75 mg KOH/g,
and a curing agent for the resins.

By using this thermally curable powder coating composition, the decoration on the substrates can be very detailed and bright colours can be used without the risk of colour diffusion. The thus decorated substrates are very durable and show excellent weather and outdoor resistance. Depending upon the curing temperature of the coating composition, use on heat sensitive substrates is also possible.

It is noted that WO 9605239 describes a thermosetting powder coating composition containing a blend of a hydroxylated polyester resin having a low hydroxyl number and a hydroxylated resin having a high hydroxyl number. It is indicated that this material has high hardness and good caking stability.
There is nothing in this reference on image transfer processes or the specific problems associated therewith.

It was found that for a proper transfer of the decoration from the sheet onto the coated substrate, the T_{g} and the hardness of the cured coating at the temperature at which the transfer of the decoration takes place are of the utmost importance. Normally, this transfer process is operated in the temperature range between 180 to 220°C.

If the T_{g} is too low, i.e. below 50°C, the coating will be too soft at the transfer temperature in the range of 180 to 220°C. This will hamper the release of the sheet from the substrate after the transfer of the decoration, due to the softening of the coated surface.
If the T_{g} is too high, i.e. above 130°C, the coating will be too brittle, causing easy damaging of the substrate in normal use and, for some substrates, poor adhesion between the coating and the surface.
In view of the optimum results obtained in the heat transfer of a decoration, preference is given to a coating that is cured until it has a T_{g} between 80 and 110°C.

Further, the hardness of the coating at the temperature at which the decoration is transferred onto the substrate is important. If the hardness is too low, the release of the sheet from the substrate after the transfer of the decoration will be hampered. If the hardness is too high, an incomplete transfer of the decoration will be observed (or a longer time is needed for the complete transfer of the decoration), and also the adhesion between the coating and the surface will be lower.

A reliable measure of the hardness of the coating at the temperature at which the decoration is transferred onto the substrate is the scar resistance of the cured coating at 200°C. For a quick release of the sheet from the substrate, the scar resistance should be at least 3N, preferably at least 8N, more in particular at least 11N. The upper limit for the scar resistance is given by the time needed for the complete transfer of the decoration. This maximum time depends, int. al., on the thermal stability of the substrate. In general, it can be said that the scar resistance should be less than 30N in order to achieve the transfer of the decoration onto the substrate in a reasonable period of time when the temperature during the transfer of the decoration into the coating is from 180 to 220°C.

In particular if heat sensitive substrates are used, the manner of heating the substrate during the flowing out of the coating, the curing thereof, and the transfer of the decoration is important. For these substrates, IR heating is particularly useful. Using IR heating makes it possible to heat only the side of the substrate that is coated/decorated.

The thermally curable powder coating composition used in the process according to the present invention comprises a mixture of resins wherein at least one resin has a hydroxy number of less than 75 mg KOH/g and at least one other resin has a hydroxy number of at least 75 mg KOH/g.
Examples of resins that can be used in said coating composition are epoxy resins, polyester resins, acrylic resins. In view of their good properties, preference is given to the use of a mixture of polyester resins.
Further preference is given to the use of at least one resin with a hydroxy number of less than 50 mg KOH/g in combination with a resin with a hydroxy number of at least 200 mg KOH/g.
It was further found that optimum results are obtained when the mixture of resins has a hydroxy number in the range from 50 - 250 mg KOH/g, preferably in the range from 75 - 150 mg KOH/g.

Commercially available resins with an OH number of less than 75 that can be used in the powder coating composition according to the present invention are, e.g.,
- Uralac P1460, Uralac P1480, Uralac P2115, Uralac P2504, Uralac P4215 (all ex DSM),
- Albester 3000, Albester 3120, Albester 3160, Albester 3190, Albester 3200, Albester 3210, Albester 3220, Albester 3280, Albester 3820, Alcure 4400, Alcure 4402, Alcure 4430, Alcure 4431, Alcure 4450, Alcure 4470, (all ex McWhorter),
- Joncryl SCX 804 (ex SC Johnson Polymer),
- Crylcoat 240, Crylcoat 283, Crylcoat 290, Crylcoat 291, Crylcoat 690, Crylcoat 2383, Crylcoat E4493, (all ex UCB), and
- Alftalat AN 739, Alftalat AN 745, Alftalat AN 792 (all ex Vianova).

Commercially available resins with an OH number of at least 75 that can be used in the powder coating composition according to the present invention are, e.g.,
- Albester 3020, Albester 3100, Albester 3110 (all ex McWhorter),
- Joncryl 587 (ex SC Johnson Polymer), and
- Alftalat VAN 9914, Alftalat VAN 9918 (both ex Vianova).

The coating composition used in the process according to the present invention further comprises a curing agent for the mixture of resins.
Isocyanate-functional curing agents are highly suitable to be used in the powder coating composition according to the present invention, since their use results in cured coatings with excellent physical properties.
The isocyanate-functional compound can be an aromatic, aliphatic, cycloaliphatic and/or araliphatic isocyanate-functional compound. The isocyanate-functional compound can be an isocyanurate, uretdione, biuret, allophanate, an adduct, NCO prepolymers, or mixtures thereof.
Examples of suitable isocyanates to be used as the isocyanate-functional compound, or as starting materials for preparing an isocyanate-functional compound comprising an isocyanurate, biuret or uretdione structure include organic polyisocyanates represented by the formula

R(NCO)ₖ

wherein k is 2 or higher and R represents an organic group obtained by removing the isocyanate groups from an organic polyisocyanate having aromatically or (cyclo)aliphatically bound isocyanate groups. Examples of diisocyanates are those represented by the above formula wherein k is 2 and R represents a divalent aliphatic hydrocarbon group having 2 to 18 carbon atoms, a divalent cycloaliphatic hydrocarbon group having 5 to 15 carbon atoms, a divalent araliphatic hydrocarbon group having 7 to 15 carbon atoms or a divalent aromatic hydrocarbon group having 6 to 15 carbon atoms.

Examples of isocyanate-functional curing agents that can be used in the coating composition according to the present invention include compounds having blocked NCO-groups that become unblocked at elevated temperature, for example, caprolactam blocked NCO-groups that become unblocked when heated in the temperature range from 150 - 200°C. It is also possible to use isocyanate-functional curing agents without blocking groups, for example, compounds comprising uretdione groups.
Since blocking groups will be released upon heating of an isocyanate-functional curing agent having blocked NCO-groups, preference is given to the use of isocyanate-functional curing agents without blocking groups.

Commercially available resins with an OH number of at least 75 that can be used in the powder coating composition according to the present invention are, e.g.,
- Crelan VPLS 2147, Crelan VPLS 2181/1, Crelan VPLS 2256, Crelan VPLS 2347, Crelan Ul (all ex Bayer),
- Vestagon BF1320, Vestagon B1530, Vestagon B1540 (all ex Hüls), and
- Additol XL 432, Additol XL 465, Additol XL 1381, Additol XL 9804, Additol XL 9935, Additol XL 9946, Beckopox EH 694 (all ex Vianova),

To obtain optimum film properties, it is recommended that the groups in the resin that take part in the cross-linking reaction are present in stoichiometric amounts relative to the reactive groups in the curing agent. If an OH-functional resin is reacted with a polyurethane, this corresponds to an OH:NCO ratio of 1.

The composition can also contain one or more fillers or additives. Fillers can be any fillers known to those skilled in the art, e.g., barium sulphate, calcium sulphate, calcium carbonate, silicas or silicates (such as talc, feldspar, and china clay). Additives such as stabilisers, antioxidants, levelling agents, antisettling agents, matting agents, rheology modifiers, surface-active agents, UV light absorbers, light stabilizers, amine synergists, waxes, or adhesion promotors can also be added.
The composition can also contain one or more pigments to obtain a coloured coating on the substrate. In principle, all pigments known to those skilled in the art can be used.

The treatment to prepare the surface of the substrate for the application of a coating may comprise well-known methods for cleaning a surface, such as brushing, washing, de-greasing, phosphating and/or chromating. The application of a primer can be included in this treatment. However, this is optional, e.g., to obtain special decoration effects, to improve the properties of the substrate surface such as by hiding its defects, to improve adhesion, or to improve the applicability of a coating (e.g., a conductive primer, to facilitate electrostatic powder application onto non-conductive substrates).
For non-conductive substrates it is also possible to heat the substrate during application of the powder coating. Another way to pre-treat the substrate is to cool it to a temperature below 0°C followed by application of the powder coating at room temperature at a relative humidity higher than 50%.

In general, the process for the preparation of a decorated substrate using the thermosetting powder coating composition according to the present invention comprises the following steps:
- submitting the substrate to a treatment to prepare its surface for the application of a coating,
- applying the powder coating of the present invention by processes known in the art, e.g., spraying with an electrostatic or tribo-electric gun,
- melting the powder by convection or radiation heating (for heat sensitive substrates preference is given to the use of IR heating of the side of the substrate that is to be covered by the coating)
- curing the coating,
- covering the surface of the substrate with a sheet comprising a decoration which is to be transferred to said surface,
- heating the substrate and/or the sheet comprising the decoration to effect the transfer of the decoration from the sheet onto the substrate.
This process is another embodiment of the present invention.

In this process preference is given to heating the substrate and/or the sheet to a temperature in the range from 180 to 220°C to obtain a complete transfer of the decoration in a relatively short period of time, normally 30 - 40 seconds. In this process the best results are found if the T_{g} of the cured coating is in the range from 50 to 130°C. Further, also the hardness of the coating is important. For a quick release of the sheet from the substrate after the transfer of the decoration, the scar resistance of the cured coating at 200°C preferably is at least 3N.

The sheet comprising the decoration can be, e.g., a paper or textile sheet provided with the decoration. For these decorations so-called sublimatic pigments or dyestuffs are used. These decorated sheets are well-known in the art.

Optionally, a (clear) topcoat can be applied to the substrate after the transfer of the decoration. This can be done to obtain special decoration effects and/or to improve the properties of the decorated surface.

The process for transfer printing according to the present invention is suited in particular for the decoration of ceramic and glass substrates like tiles and bottles. However, the process can also be used for the decoration of other substrates, such as metal, concrete or wooden substrates.

### Measurement methods

### T_{g} of a cured coating

The glass transition temperature, T_{g}, is the temperature at which the coating modifies its solid state to a rubber-like state. This is a second-order phase transition, which can be shown as a variation of specific heat.
T_{g} is measured using a differential scanning calorimeter. The following procedure was used for a Perkin-Elmer DSC-7:
- 15-20 mg of the cured coating is placed in an aluminium sample pan provided with a lid. The lid is closed under a press and the sample pan is placed in the DSC-7. The Glass Transition Temperature program is started, involving uniform heating of the sample at a rate of 10°C/min from 20°C up to 180°C.
- The program automatically generates data for the glass transition temperature as TG1 (transition starting), TG2 (half transition), and TG3 (transition end). TG2 is taken as the T_{g} of the cured coating sample.
For the measurement of T_{g} reference is made to DIN 53765 and ASTM D 3418.

### Scar resistance

To measure the scar resistance of a cured coating, the coating is applied to a steel panel in a film thickness of 60-80 µm and cured. The scar resistance is measured using an Oesterle model 435 scar resistance tester (Erichsen Instrument). Measurements at temperatures above room temperature were performed in an oven, after checking that the coating had effectively reached the indicated testing temperature. The term scar resistance refers to the minimal pressure whereby a deep sign/scratch is left in the film.

### Examples

### Example 1

A clear thermally curable powder coating having the following composition is prepared:

| Component | Amount (parts by weight) |
|---|---|
| High hydroxyl resin¹ | 23 |
| Low hydroxyl resin² | 40 |
| Curing agent³ | 33 |
| Additives/fillers | 4 |

| | |
|---|---|
| ¹ Polyester resin, OH-value: 280-340 mg KOH/g, T_{g} 44-52°C | |
| ² Polyester resin, OH-value: 27-37 mg KOH/g, T_{g} 52-56°C | |
| ³ ε-caprolactam blocked IPDI adduct, T_{g} 41-53°C | |

Using an electrostatic spraying gun or a tribo-electric spraying gun, the powder coating is applied to pre-treated terra-cotta without vitreous enamel, i.e. raw tiles. So much coating material is applied as will give a coating with a thickness between 60 and 100 µm. The coating is cured in an oven for 15 minutes at 200°C. During the curing of the coating caprolactam is released. The obtained coating has a very good adhesion to the substrate, and an excellent solvent resistance.
The coated substrate is then decorated by covering it with a heat-transfer paper containing sublimatic dyestuffs and keeping it in a press heated at 190-200°C for 30 - 40 seconds.

After the sublimatic transfer of the decoration the paper sheet does not stick to the coated substrate and can be released easily. The decoration is well fixed and protected by the coating; it cannot be removed by a solvent, the light fastness is excellent.

### Example 2

Example 1 is repeated using a clear powder coating having the following composition.

| Component | Amount (parts by weight) |
|---|---|
| High hydroxyl resin¹ | 32 |
| Low hydroxyl resin² | 41 |
| Curing agent³ | 23 |
| Additives/fillers | 4 |

| | |
|---|---|
| ¹ Polyester resin, OH-value: 90-110 mg KOH/g, T_{g} ≥52°C | |
| ² Polyester resin, OH-value: 27-37 mg KOH/g, T_{g} 52-56°C | |
| ³ ε-caprolactam blocked IPDI adduct, T_{g} 41-53°C | |

The obtained coating has a very good adhesion to the substrate and an excellent solvent resistance. The Tg of the cured coating is 85°C, the scar resistance at 200°C = 10N.
After the sublimatic transfer of the decoration the paper sheet does not stick to the coated substrate and can be released easily. The decoration is well fixed and protected by the coating; it cannot be removed by a solvent, the light fastness is excellent.

### Example 3

Example 1 is repeated using a clear powder coating having the following composition:

| Component | Amount (parts by weight) |
|---|---|
| High hydroxyl resin¹ | 18 |
| Low hydroxyl resin² | 46 |
| Curing agent³ | 23 |
| Additives/fillers | 4 |

| | |
|---|---|
| ¹ Polyester resin, OH-value: 280-310 mg KOH/g, T_{g} 43-49°C | |
| ² Polyester resin, OH-value: 35-45 mg KOH/g, T_{g} 55-60°C | |
| ³ Cycloaliphatic polyuretdione without blocking agent T_{g} 40-55°C | |

During the curing of this coating no caprolactam is released.
The obtained coating has a very good adhesion to the substrate and an excellent solvent resistance. The Tg of the cured coating is 81°C, the scar resistance at 200°C = 9N.
After the sublimatic transfer of the decoration the paper sheet does not stick to the coated substrate and can be released easily. The decoration is well fixed and protected by the coating; it cannot be removed by a solvent, the light fastness is excellent.

### Example 4

Example 1 is repeated using a white powder coating having the following composition:

| Component | Amount (parts by weight) |
|---|---|
| High hydroxyl resin¹ | 21 |
| Low hydroxyl resin² | 38 |
| Curing agent³ | 32 |
| White pigment | 5 |
| Additives/fillers | 4 |

| | |
|---|---|
| ¹ Polyester resin, OH-value: 280-340 mg KOH/g, T_{g} 44-52°C | |
| ² Polyester resin, OH-value: 27-37 mg KOH/g, T_{g} 52-56°C | |
| ³ ε-caprolactam blocked IPDI adduct, T_{g} 41-53°C | |

The obtained coating has a very good adhesion to the substrate and an excellent solvent resistance. The Tg of the cured coating is 86°C, the scar resistance at 200°C = 14N.
After the sublimatic transfer of the decoration the paper sheet does not stick to the coated substrate and can be released easily. The decoration is well fixed and protected by the coating; it cannot be removed by a solvent, the light fastness is excellent.

### Example 5

Example 1 is repeated using a clear powder coating having the following composition:

| Component | Amount (parts by weight) |
|---|---|
| High hydroxyl resin¹ | 30 |
| Low hydroxyl resin² | 39 |
| Curing agent³ | 21 |
| White pigment | 5 |
| Additives/fillers | 5 |

| | |
|---|---|
| ¹ Polyester resin, OH-value: 90-110 mg KOH/g, T_{g} ≥52°C | |
| ² Polyester resin, OH-value: 27-37 mg KOH/g, T_{g} 52-56°C | |
| ³ ε-caprolactam blocked IPDI adduct, T_{g} 41-53°C | |

The obtained coating has a very good adhesion to the substrate and an excellent solvent resistance. The Tg of the cured coating is 85°C, the scar resistance at 200°C = 10N.
After the sublimatic transfer of the decoration the paper sheet does not stick to the coated substrate and can be released easily. The decoration is well fixed and protected by the coating; it cannot be removed by a solvent, the light fastness is excellent.

### Example 6

Example 1 is repeated using a white powder coating having the following composition:

| Component | Amount (parts by weight) |
|---|---|
| High hydroxyl resin¹ | 17 |
| Low hydroxyl resin² | 43 |
| Curing agent³ | 30 |
| White pigment | 5 |
| Additives/fillers | 5 |

| | |
|---|---|
| ¹ Polyester resin, OH-value: 280-310 mg KOH/g, T_{g} 43-49°C | |
| ² Polyester resin, OH-value: 35-45 mg KOH/g, T_{g} 55-60°C | |
| ³ Cycloaliphatic polyuretdione without blocking agent T_{g} 40-55°C | |

During the curing of this coating no caprolactam is released.
The obtained coating has a very good adhesion to the substrate and an excellent solvent resistance. The Tg of the cured coating is 81°C, the scar resistance at 200°C = 9N.
After the sublimatic transfer of the decoration the paper sheet does not stick to the coated substrate and can be released easily. The decoration is well fixed and protected by the coating; it cannot be removed by a solvent, the light fastness is excellent.

### Example 7

Example 1 is repeated using a white powder coating having the following composition:

| Component | Amount (parts by weight) |
|---|---|
| High hydroxyl resin¹ | 20 |
| Low hydroxyl resin² | 39 |
| Curing agent³ | 33 |
| White pigment | 5 |
| Additives/fillers | 6 |

| | |
|---|---|
| ¹ Polyester resin, OH-value: 280-340 mg KOH/g, T_{g} 44-52°C | |
| ² Polyester resin, OH-value: 27-37 mg KOH/g, T_{g} 52-56°C | |
| ³ Cycloaliphatic polyuretdione without blocking agent T_{g} 40-55°C | |

During the curing of this coating no caprolactam is released.
The obtained coating has a very good adhesion to the substrate and an excellent solvent resistance. The Tg of the cured coating is 83°C, the scar resistance at 200°C = 8N.
After the sublimatic transfer of the decoration the paper sheet does not stick to the coated substrate and can be released easily. The decoration is well fixed and protected by the coating; it cannot be removed by a solvent, the light fastness is excellent.

### Comparative example 1

Example 1 is repeated using a clear powder coating having the following composition:

| Component | Amount (parts by weight) |
|---|---|
| Hydroxyl resin¹ | 82 |
| Curing agent² | 13 |
| Additives/fillers | 4 |

| | |
|---|---|
| ¹ Polyester resin, OH-value: 27-37 mg KOH/g, T_{g} 52-56°C | |
| ² ε-caprolactam blocked IPDI adduct, T_{g} 41-53°C | |

After the sublimatic transfer of the decoration the paper sheet sticks to the coated substrate and cannot be released easily.

### Comparative example 2

Example 1 is repeated using a white powder coating having the following composition:

| Component | Amount (parts by weight) |
|---|---|
| Hydroxyl resin¹ | 78 |
| Curing agent² | 13 |
| White pigment | 5 |
| Additives/fillers | 4 |

| | |
|---|---|
| ¹ Polyester resin, OH-value: 27-37 mg KOH/g, T_{g} 52-56°C | |
| ² ε-caprolactam blocked IPDI adduct, T_{g} 41-53°C | |

After the sublimatic transfer of the decoration the paper sheet sticks to the coated substrate and cannot be released easily.

## Claims

1. A process for the preparation of a decorated substrate comprising the steps of:
- submitting the substrate to a treatment to prepare its surface for the application of a coating,
- applying a coating to the surface of the substrate in one or more cycles,
- curing the coating by heat, and
- covering the surface of the substrate with a sheet comprising a decoration which is to be transferred to said surface,
**characterised in that** the coating is a thermally curing powder coating composition comprising a mixture of resins and a curing agent for the resins wherein
- at least one resin has a hydroxy number of less than 75 mg KOH/g,
- at least one resin has a hydroxy number of at least 75 mg KOH/g.

2. A process according to claim 1, **characterised in that** the mixture of resins has an average hydroxy number in the range from 50 to 250.

3. A process according to claim 1 or 2, **characterised in that** at least one resin has a hydroxy number of less than 50.

4. A process according to any one of the preceding claims, **characterised in that** at least one resin has a hydroxy value of at least 200.

5. A process according to any one of the preceding claims, **characterised in that** the cured coating has a T_{g} between 50 and 130°C and a scar resistance at 200°C of at least 3N.

6. A process according to any one of the preceding claims, **characterised in that** the temperature during the transfer of the decoration to the substrate is from 180 to 220°C.

7. A process according to any one of the preceding claims, **characterised in that** the substrate is a ceramic or glass substrate.

8. A process according to any one of the preceding claims, **characterised in that** the substrate is a tile or a bottle.

## Patentansprüche

1. Verfahren zur Herstellung eines dekorierten Substrats, das die folgenden Schritte umfasst:
- das Unterziehen des Substrats einer Behandlung, um seine Oberfläche für das Auftragen einer Beschichtung vorzubereiten,
- das Auftragen einer Beschichtung auf die Oberfläche des Substrats in einem oder mehreren Zyklen,
- das Härten der Beschichtung durch Wärme und
- das Bedecken der Oberfläche des Substrats mit einer Folie, die eine Dekoration umfasst, die auf diese Oberfläche übertragen werden soll,
**dadurch gekennzeichnet, dass** die Beschichtung eine thermisch härtende Pulver-Beschichtungszusammensetzung ist, die eine Mischung von Harzen und ein Härtungsmittel für die Harze umfasst, wobei
- wenigstens ein Harz eine Hydroxylzahl von weniger als 75 mg KOH/g hat,
- wenigstens ein Harz eine Hydroxylzahl von wenigstens 75 mg KOH/g hat.

2. Verfahren gemäß Anspruch 1, **dadurch gekennzeichnet, dass** die Mischung von Harzen eine durchschnittliche Hydroxylzahl im Bereich von 50 - 250 hat.

3. Verfahren gemäß den Ansprüchen 1 oder 2, **dadurch gekennzeichnet, dass** wenigstens ein Harz eine Hydroxylzahl von weniger als 50 hat.

4. Verfahren gemäß irgendeinem der vorhergehenden Ansprüche, **dadurch gekennzeichnet, dass** wenigstens ein Harz eine Hydroxylzahl von wenigstens 200 hat.

5. Verfahren gemäß irgendeinem der vorhergehenden Ansprüche, **dadurch gekennzeichnet, dass** die gehärtete Beschichtung ein T_{g} zwischen 50 °C und 130 °C und eine Kratzbeständigkeit bei 200 °C von wenigstens 3 N hat.

6. Verfahren gemäß irgendeinem der vorhergehenden Ansprüche, **dadurch gekennzeichnet, dass** die Temperatur während der Übertragung der Dekoration auf das Substrat 180 - 220 °C ist.

7. Verfahren gemäß irgendeinem der vorhergehenden Ansprüche, **dadurch gekennzeichnet, dass** das Substrat ein keramisches Substrat oder ein Glassubstrat ist.

8. Verfahren gemäß irgendeinem der vorhergehenden Ansprüche, **dadurch gekennzeichnet, dass** das Substrat eine Fliese oder eine Flasche ist.

## Revendications

1. Processus de préparation d'un substrat décoré comprenant les étapes visant à :
- soumettre le substrat à un traitement pour préparer sa surface à l'application d' un revêtement,
- appliquer un revêtement à la surface du substrat en un ou plusieurs cycles,
- durcir le revêtement par la chaleur, et
- couvrir la surface du substrat avec une feuille comprenant une décoration qui doit être transférée à ladite surface,
**caractérisé en ce que** le revêtement est une composition de revêtement en poudre thermodurcissable comprenant un mélange de résines et un agent de durcissement pour les résines dans laquelle :
- au moins une résine a un indice d'hydroxyle inférieur à 75 mg KOH/g,
- au moins une résine a un indice d' hydroxyle d'au moins 75 mg KOH/g.

2. Processus selon la revendication 1, **caractérisé en ce que** le mélange de résines a un indice d'hydroxyle moyen dans la plage de 50 à 250.

3. Processus selon la revendication 1 ou 2, **caractérisé en ce qu'**au moins une résine a un indice d' hydroxyle inférieur à 50.

4. Processus selon l'une quelconque des revendications précédentes, **caractérisé en ce qu'**au moins une résine a un indice d'hydroxyle d'au moins 200.

5. Processus selon l'une quelconque des revendications précédentes, **caractérisé en ce que** le revêtement durci possède une T_{g} comprise entre 50 et 130°C et présente une résistance aux rayures à 200°C d'au moins 3 N.

6. Processus selon l'une quelconque des revendications précédentes, **caractérisé en ce que** la température durant le transfert de la décoration au substrat est comprise entre 180 et 220°C.

7. Processus selon l'une quelconque des revendications précédentes, **caractérisé en ce que** le substrat est un substrat en céramique ou en verre.

8. Processus selon l'une quelconque des revendications précédentes, **caractérisé en ce que** le substrat est une tuile ou une bouteille.
